# EUROPÄISCHE PATENTANMELDUNG

(11) **EP 0 733 781 A2**
(43) Veröffentlichungstag der Anmeldung: **25.09.1996**
(21) Anmeldenummer: 95810710.4
(22) Anmeldetag: 10.11.1995
(51) Int. Cl.: E21D 20/02

(54) **Mörtelgebinde zur chemischen Befestigung von Verankerungsmitteln in Bohrlöchern**

(30) Priorität: 22.03.1995 DE 19510307
(71) Anmelder: HILTI Aktiengesellschaft, 9494 Schaan (LI)
(72) Erfinder: Skupien, Roman, D-86159 Augsburg (DE); Leibhard, Erich, D-81476 München (DE); Sager, Lutz Achim, D-86899 Landsberg (DE)
(74) Vertreter: Wildi, Roland

(57) **Zusammenfassung**

Es ist ein Mörtelgebinde zur chemischen Befestigung von Verankerungsmitteln in Bohrlöchern beschrieben, das ein im wesentlichen zylindrisches äusseres Behältnis (2) umfasst, welches beim Setzen des Verankerungsmittels zerstörbar ist, und innerhalb des Behältnisses (2) angeordnet die einzelnen Bestandteile eines Mehrkomponentenmörtels enthält, der ein Bindemittelsystem (6, 8) und Füllstoffe (7) umfasst. Das Behältnis (2) besteht aus einem flexiblen Material (3, 4), dessen Volumensanteil weniger als 15 % des Gesamtvolumens des Mörtelgebindes (1) beträgt, wobei der Volumensanteil des Bindemittelsystems (6, 8) etwa 15% bis etwa 60% und der des Füllstoffs (7) etwa 35% bis etwa 70% des Gesamtvolumens des Mörtelgebindes (1) beträgt.

## Beschreibung

Die Erfindung betrifft ein Mörtelgebinde zur chemischen Befestigung von Verankerungsmitteln in Bohrlöchern, das ein im wesentlichen zylindrisches äusseres Behältnis umfasst, welches beim Setzen des Verankerungsmittels zerstörbar ist, und innerhalb des Behältnisses angeordnet die einzelnen Bestandteile eines Mehrkomponentenmörtels enthält, der ein Bindemittel und Füllstoffe umfasst.

Chemische Befestigungstechniken kommen vor allem im Bergwerkswesen, im Tunnelbau, für Spezialbefestigungen bei der Erstellung von Schienenverkehrswegen, für korrosionsgefährdete Anwendungen in durchfeuchteten Untergründen, für Schwerlastverankerungen u.v.a.m. zur Anwendung. Mit Hilfe der chemischen Befestigungstechnik können spreizdruckfreie Befestigungen mit hoher Tragfestigkeit erstellt werden. Zur Befestigung von Verankerungsmitteln wie beispielsweise Ankerstangen, Innengewindehülsen oder Betoneisen in Gestein oder Beton werden im allgemeinen Patronen verwendet, die zwei oder mehrere Kammern zur getrennten Aufbewahrung der Bestandteile eines Mehrkomponentenmörtels aufweisen. Der Mehrkomponentenmörtel umfasst in der Regel ein organisches oder anorganisches Bindemittel oder ein Gemisch der beiden Bindemittel sowie Füllstoffe, die im ausgehärteten Mörtel eine Stütz- und Verstärkungsfunktion erfüllen und ihm so die erforderliche Festigkeit verleihen. Die Patrone wird in ein Bohrloch eingesetzt, und durch schlagdrehendes Einbringen des Verankerungsmittels werden die Patrone bzw. die Kammern der Patrone zerstört. Dabei werden die Reaktionskomponenten des Mehrkomponentenmörtels gemischt und die Aushärtreaktion wird initiiert. Der ausgehärtete Mehrkomponentenmörtel ist in der Lage, spreizdruckfrei die Lasteinleitung in den Untergrund zu ermöglichen. In der Vergangenheit haben sich derartige Verbundanker vor allem auch für Schwerlastverankerungen bewährt.

In der EP-B-0150555 sind verschiedene Ausführungsvarianten von Patronen bzw. Mörtelgebinden beschrieben, die zwei voneinander getrennte Kammern aufweisen, in denen ein aus einem Epoxyacrylatharz und einem Härter bestehendes Bindemittel untergebracht ist. Das Mörtelgebinde kann zusätzlich jeweils bis das 5-fache des Gewichtes des Bindemittels an groben und feinen Füllstoffen enthalten. Das Mörtelgebinde weist ein äusseres Glasgefäss auf, in dem ein zweites innereres Glasgefäss enthalten ist. Beim schlagdrehenden Einbringen des Verankerungsmittels werden die Glasgefässe zerstört und mehr oder weniger fein zermahlen. Die Bruchstücke des Glases bilden einen Bestandteil der Füllstoffe und sollen zusammen mit diesen das ausgehärtete Harz verstärken, um ihm die nötige Festigkeit zu verleihen. Allerdings ist nicht vorhersehbar, wie stark das Glas beim Einbringen des Verankerungsmittels zerkleinert wird. Die Grösse der Glasbruchstücke ist von Befestigungspunkt zu Befestigungspunkt verschieden. Einmal wird das Glas in relativ grosse Bruchstücke zerbrochen, das andere mal wird es sehr fein zermahlen. Diese unterschiedliche Grösse der Glasbruchstücke wirkt sich aber unmittelbar auf die Festigkeit des Mörtels aus. Die Tragfähigkeit der Verankerung ist von Befestigungspunkt zu Befestigungspunkt unterschiedlich und kann nicht mehr zufriedenstellend kontrolliert werden.

Dadurch, dass die Glasgefässe bei den einzelnen Befestigungspunkten in verschieden grosse Bruchstücke zerkleinert werden, ergeben sich beim Einbringen der Verankerungsmittel auch verschieden grosse Setzwiderstände. Der Setzwiderstand definiert, wie schnell ein Verankerungsmittel, beispielsweise eine Ankerstange, in ein Bohrloch eingebracht werden kann. Berücksichtigt man, dass die Durchmischung der Reaktionskomponenten des Bindemittels, beispielsweise von einem Reaktivharz und einem Härter durch die schlagrotierte Ankerstange erfolgt, so ist leicht einsichtig, dass ein allzu schnelles Einbringen der Ankerstange in das Bohrloch die Reaktionskomponenten des Bindemittels nur unzureichend durchmischt. Dadurch härtet das Reaktivharz nur unvollständig aus, und die Verankerung erzielt nicht die erforderliche Tragfähigkeit. Durch die unzureichende Durchmischung werden auch die Füllstoffe nur sehr ungleichmässig im Bindemittel verteilt, was die Festigkeit des ausgehärteten Kunstharzes beeinträchtigt und die Tragfähigkeit der Verankerung noch weiter vermindern kann. Andererseits ist von der Anwenderseite her gewünscht, dass das Einbringen der Verankerungsmittel in die Bohrlöcher möglichst schnell erfolgt und von Befestigungspunkt zu Befestigungspunkt immer etwa gleich lang dauert.

Die Glasgefässe des bekannten Mörtelgebindes sind leicht zerbrechlich und müssen daher sehr sorgfältig verpackt sein, um zu verhindern, dass ein Gefäss bei der Lagerung und bei der Handhabung zerbricht und zu Gefährdungen und zu unangenehmen Verschmutzungen führt. Falls der innere Glasbehälter bricht, kommen das Kunstharz und der Härter miteinander in Verbindung und die Härtungsreaktion wird unbeabsichtigt ausgelöst. Üblicherweise werden immer mehrere Glaspatronen in einer weitgehend stossgesicherten Kartonverpackung aufbewahrt. Sollte eine der Galspatronen innerhalb der Verpackung vollständig zerstört werden und die Härtungsreaktion ausgelöst werden, so ist der gesamte Inhalt der Verpackung unbrauchbar. In der EP-B-0 150 555 ist zwar vorgeschlagen, anstelle des äusseren Glasgefässes einen Kunststoffbeutel zu verwenden, in dem das innere Glasgefäss angeordnet ist. Jedoch kann das innere Glagefäss immer noch unbeabsichtigt zerstört werden, wodurch die beiden Reaktionskomponenten des Bindemittels miteinander in Verbindung treten und die Härtungsreaktion ausgelöst wird. Auch kann es vorkommen, dass die Bruckstücke des zerbrochenen inneren Glasgefässes den Kunststoffbeutel zerstören und die Reaktionskomponenten, beispielsweise das Hart und der Härter austreten, sich über andere beispielsweise in einem Karton aufbewahrte Mörtelgebinde ergiessen und aushärten, wodurch der gesamte Inhalt des Kartons unbrauchbar werden kann. Das Verhaltens des Kunstoffbeutels beim drehschlagenden Einbringen des Verankerungsmittels ist in der Druckschrift nicht näher beschrieben. Es ist jedoch zu bedenken, dass ein Anlegen des Kunststoffbeutels an die Bohrlochwandung zu einer nur wenig tragfesten Befestigung führt, die für den Anwender in der Regel unakzeptabel ist.

Aus der US-A-3,474,898 sind verschiedene Ausführungsvarianten eines Mörtelgebindes bekannt, welches einen zwei oder mehrere Kammern aufweisenden Schlauchbeutel aus Kunststoff-beschichteten Metallfolien umfasst. Die Kammern werden bevorzugt durch Versiegeln des Beutels erstellt. Die Siegelnähte sind durch Kneten des Schlauchbeutels wieder aufbrechbar, so dass das Kunstharz und ein Härter, welche zuvor getrennt waren, vermischt werden. Nachdem der Beutel ausreichend von Hand geknetet worden ist, kann er in ein Bohhrloch eingeschoben werden. Ein Verankerungsmittel, beispielsweise eine Ankerstange, wird in das Bohrloch nachgeschoben, wobei der Beutel aufplatzt. Beim axialen Einbringen der Ankerstange in das Bohrloch wird das Kunstharz-Härter Gemisch aus dem Beute gepresst. Der Beutel wird weiter in das Bohrloch geschoben und am Bohrlochgrund zusammengeschoben. Bei diesen bekannten Schlauchbeutelverpackungen wird das Bindemittel, welches ein Kunstharz und einen Härter umfasst, nur unzureichend durch Kneten von Hand durchmischt. Dadurch kann es zu unvollständigem Aushärten des Bindemittels kommen, was die Tragfestigkeit der Verankerung herabsetzt. Durch das Kneten wird die Form des Mörtelgebindes stark verändert, was zu Schwierigkeiten beim Einschieben des Schlauchbeutels in das Bohrloch führen kann. Das Bohrloch muss relativ tief gebohrt werden, da es den am Bohrlochgrund zusammengeschoben Schlauchbeutel aufnehmen muss. Auch kann es vorkommen, dass der Schlauchbeutel nicht vollständig gestaucht wird, sondern dass ein Teil des Schlauchbeutels zwischen der Bohrlochwandung und dem Verankerungsmittel eingeklemmt wird. Diese Bereiche tragen dann nicht mehr zur Tragfestigkeit der Verankerung bei und die geforderten Auszugswerte können nicht mehr erreicht werden.

Aufgabe der vorliegenden Erfindung ist es daher, ein Mörtelgebinde für die chemische Befestigungstechnik von Verankerungsmitteln zu schaffen, welches eine möglichst gute Verbindung zwischen dem zu befestigenden Verankerungsmittel und der Bohrlochwandung gewährleistet. Das zerstörbare Behältnis, in dem die einzelnen Bestandteile des Mehrkomponentenmörtels enthalten sind, soll keine nachteiligen Auswirkungen auf die Tragfestigkeit der Befestigung haben. Das Behältnis soll beim drehschlagenden Einbringen des Verankerungsmittels ausreichend zerkleinert werden und möglichst gleichmässig in dem Mehrkomponentenmörtel verteilt werden. Die Reaktionskomponenten des Bindemittels sollen während der Lagerung des Gebindes nicht miteinander reagieren und beim Einbringen des Verankerungsmittels möglichst homogen durchmischt werden, um ein gleichmässiges Aushärten des Mörtels zu gewährleisten. Der Füllstoff soll in dem ausgehärteten Mörtel über die gesamte Bohrlochtiefe eine gleichmässige, abstützende und/oder armierende Funktion übernehmen. Die im wesentlichen für die Festigkeit des Mörtels verantwotlichen Füllstoffe sollen in der Mehrzahl bezüglich ihrer Teilchengrösse und Teilchenbeschaffenheit kontrollierbar sein. Die Setzgeschwindigkeit des Verankerungelements soll im wesentlichen vorherbestimmbar sein und soll von Befestigungspunkt zu Befestigungspunkt im wesentlichen gleich sein. Das Mörtelgebinde soll eine einfache Lagerung erlauben, einfach handzuhaben sein und insbesondere einfach in ein Bohrloch einsetzbar sein. Es soll unempfindlich gegenüber Erschütterungen sein, und die Härtungsreaktion des Mörtels soll auch bei einem versehentlichem Zubodenfallen des Behältnisses nicht ausgelöst werden.

Die Lösung dieser Aufgaben besteht in einem Mörtelgebinde zur chemischen Befestigung von Verankerungsmitteln in Bohrlöchern, das ein im wesentlichen zylindrisches äusseres Behältnis umfasst, welches beim Setzen des Verankerungsmittels zerstörbar ist, und innerhalb des Behältnisses angeordnet die einzelnen Bestandteile eines Mehrkomponentenmörtels enthält, der ein Bindemittel und Füllstoffe umfasst. Das Behältniss besteht aus einem flexiblen Material, dessen Volumensanteil weniger als 15 % des Gesamtvolumens des Mörtelgebindes beträgt, wobei der Volumensanteil des Bindemittels etwa 15% bis etwa 60% und der des Füllstoffs etwa 35% bis etwa 70% des Gesamtvolumens des Mörtelgebindes beträgt. Das flexible Material des Behältnisses gewährleistet eine gute Handhabbarkeit des Mörtelgebindes. Das Behältnis ist stabil genug, um auch ohne spezielle Vorkehrungen bei seiner Lagerung das Bindemittel und den Füllstoff zuverlässig zurückzuhalten. Es ist weitgehend unempfindlich gegenüber Erschütterungen und zerbricht nicht, auch wenn es versehentlich zu Boden fällt. Trotzdem ist das Behältnis beim drehschlagenden Einbringen eines Verankerungsmittels, beispielsweise einer Ankerstange, einer Innengewindehülse oder eines Betoneisens zerstörbar und zerkleinerbar. Dabei gewährleistet der geringe Volumensanteil des Materials des Behältnisses von weniger als 15% des Gesamtvolumens des Mörtelgebindes, dass das zerkleinerte Behältnis sich nicht negativ auf die Tragfestigkeit der Verankerung auswirkt. Der Volumensanteil des Bindemittels beträgt etwa 15% bis etwa 60% und der des Füllstoffs etwa 35% bis etwa 70% des Gesamtvolumens des Mörtelgebindes. Durch die gewählten Volumensverhältnisse ist ein ausreichend hoher Setzwiderstand beim drehschlagenden Einbringen des Verankerungsmittels gewährleistet. Der gesamte Füllstoff ist bezüglich seiner Eigenschaften und Beschaffenheit vorgebbar; das zerkleinerte Behältnis selbst ist kein Bestandteil des Füllstoffes. Dadurch kann der Setzwiderstand gezielt gesteuert werden, um eine sehr gute Durchmischung der einzelnen Bestandteile des Mehrkomponentenmörtels, insbesondere der Reaktionskomponenten des Bindemmittels, zu erreichen. Die sehr gute Durchmischung zusammen mit dem nur geringen Volumensanteil des flexiblen und zerstörbaren Materials des Behältnisses bewirkt, dass die Bestandteile des Behältnisses sehr gleichmässig im Mörtel verteilt werden. Dadurch, dass im wesentlichen der gesamte Füllstoff bezüglich seiner Eigenschaften und Beschaffenheit vorgebbar ist, kann dieser auch auf die Eigenschaften des Materials des Behältnisses abgestimmt werden, beispielsweise um die Zerkleinerung desselben beim drehschlagenden Einbringen des Verankerungsmittels zu unterstützen. Der gesamte Füllstoff kann auf das verwendete Bindemittel abgestimmt werden und gezielt auf die gewünschte Festigkeit des ausgehärteten Mörtels hin ausgewählt werden. Auf diese Weise ist eine möglichst gute Verbindung zwischen dem zu befestigenden Verankerungsmittel und der Bohrlochwandung gewährleistet.

Als Füllstoffe werden vorzugsweise grobdisperse Materialien gewählt, die gegenüber dem Bindemittel weitgehend inert sind, eine Härte nach Mohs von > 4 und eine Dichte von ≧ 2 g/cm³ aufweisen. Diese Materialien besitzen eine ausreichende Eigenstabilität, um beim drehschlagenden Einbringen des Verankerungsmittels nicht zermahlen zu werden. Durch die Durchmischung gleichmässig in der Matrix des Bindemittels verteilt, verleihen sie dem ausgehärteten Mehrkomponentenmörtel die gewünschte Festigkeit. Bevorzugt besitzen sie eine körnige und kantige Teilchengestalt. Mindestens 80% (Gewicht) der Teilchen weisen einen Äquivalentdurchmesser auf, der etwa 5% bis etwa 25% des Aussendurchmessers des Mörtelgebindes beträgt. Die körnige kantige Teilchengestalt unterstützt die Zerkleinerung des Materials, aus dem das Behältnis besteht, wenn das Verankerungsmittel drehschlagend in das Bohrloch eingebracht wird. Die gezielte Wahl von Teilchen einer relativ kleinen Äquivalentdurchmesserverteilung und einer bestimmten Dichte erlaubt eine Steuerung des Setzwiderstands und der Verteilung der Teilchen im Mehrkomponentenmörtel. Auf diese Weise kann die Festigkeit des ausgehärteten Mörtels in relativ engen Grenzen festgelegt, und damit die gewünschte Tragfähigkeit der Verankerung erreicht werden. Als Äquivalentdurchmesser eines unregelmässig geformten Füllstoffteilchens wird dabei der Durchmesser einer Kugel von äquivalentem Volumen angesehen.

Die Wandstärke des Behältnisses beträgt etwa 0,1% bis etwa 3% des Aussendurchmessers des Mörtelgebindes. Dabei ist das Material des Behältnisses eine Folie, die eine Reissdehnung von < 300% der ursprünglichen Folienlänge aufweist. Bei diesen Dimensionen und dieser Reissdehnung ist sichergestellt, dass das Behältnis einerseits eine ausreichende Festigkeit aufweist, um es einfach und sicher handhaben zu können, ohne befürchten zu müssen, dass das Behältnis versehentlich platzt und seinen Inhalt freisetzt. Andererseits ist die Festigkeit des Materials des Behältnisses auch gerade nur so gross, dass es beim drehschlagenden Einbringen des Verankerungsmittels, beispielsweise einer Ankerstange, zuverlässig zerkleinerbar ist.

Besonders einfach herstellbare Behältnisse umfassen zwei miteinander verbundene Schalen, die aus der Folie vorzugsweise geblasen oder tiefgezogen sind. Als Folienmaterialien kommen dabei Polyamid, Polyvinylchlorid, Polyacrylnitril, Polyester und/oder Verbunde aus diesen Materialien oder von Papier mit siegelfähigen Polymeren in Frage. Die Siegelnähte des Behältnisses weisen eine Breite auf, die zwischen 5% und 50% des Gebindeaussendurchmessers liegt. Bei diesen Breiten ist einerseits eine ausreichende Haltbarkeit der Siegelnähte gegeben, andererseits stören die Siegelnähte die Zerkleinerung des Behältnisses beim drehschlagenden Einbringen des Verankerungsmittels nur unwesentlich.

Das erfindungsgemässe Mörtelgebinde beinhaltet Füllstoff(e) und Bindemittel. Es können anorganische oder organische Bindemittel oder Mischungen daraus verwendet werden. Das Bindemittel umfasst bevorzugt mindestens zwei Reaktionskomponenten, die im wesentlichen über die gesamte Länge des Gebindes angeordnet sind. Als Reaktionskomponenten werden dabei einerseits diejenigen Substanzen bezeichnet, welche in der Härtungsreaktions zu Bindemittelmolekülen reagieren. Andererseits können die Reaktionskomponenten auch solche Substanzen sein, welche durch ihre Gegenwart oder eigene Reaktion die Härtungsreaktion ermöglichen, initiieren, beschleunigen, inhibieren oder katalysieren. Als Beispiel sei eine Kombination von Reaktivharzgemischen und Härter bei organischen Systemen genannt, bei welchen der Härter die Polymerisation zwar initiiert aber selbst nicht an der Reaktion beteiligt ist. Derartige Bindemittel sind aus dem Stand der Technik bekannt und im einschlägigen Einsatz erprobt. Die Verteilung der Reaktionskomponenten im wesentlichen über die gesamte Länge des Behältnisses unterstützt die homogene Vermischung der Reaktionskomponenten, um eine sehr gute und vollständige Aushärtung des Bindemittels zu gewährleisten.

In einer bevorzugten Variante des erfindungsgemässen Mörtelgebindes ist eine der Reaktionskomponenten auf vorzugsweise faserverstärkten Gewebe- oder Vliesträgern fixiert, die derart in das Material des Behältnisses eingearbeitet sind, dass die darauf fixierte Reaktionskomponente erst bei Zerstörung des Behältnisses mit der zweiten Reaktionskomponente in Verbindung kommt. Die beiden Reaktionskomponenten liegen bis zur beabsichtigten Zerstörung des Behältnisses getrennt vor. Eine unabsichtliche Durchmischung der beiden Reaktionskomponenten ist praktisch ausgeschlossen. Auf diese Art ist sichergestellt, dass der Mehrkomponentenmörtel nur im Bohrloch, nach dem Einbringen des Verankerungsmittels aushärtet.

In einer weiteren besonders vorteilhaften Ausführungsvariante des erfindungsgemässen Mörtelgebindes ist eine der Reaktionskomponenten zusammen mit inerten Hilfstoffen zu teilchenförmigen Agglomeraten verbunden, welche eine Dichte von etwa 60% bis etwa 120 % der Dichte des Füllstoffs aufweisen und einen Äquivalentdurchmesser aufweisen, der etwa das 0,5-fache bis etwa das 4-fache des Äquvalentdurchmessers der Mehrzahl der Füllstoffteilchen beträgt. Die Agglomerate sind unmittelbar in die zweite Reaktionskomponente eingebettet, wobei sie durch eine gegenüber den Reaktionskomponenten inerte Beschichtung voneinander getrennt sind. Durch die gewählte Dichte und die festgelegten Äquivalentdurchmesser der Agglomerate ist sichergestellt, dass die Agglomerate innerhalb des Mörtelgebindes ortsfest angeordnet sind und sich nicht durch die Handhabung des Mörtelgebindes an einem Ende des Behältnisses ansammeln. Die Dichte und die Äquivalentdurchmesser der Agglomerate sind gerade so gewählt, dass sie nicht durch die Wirkung der Schwerkraft im Füllstoff absinken und auch nicht in der zweiten Reaktionskomponente des Bindemittels aufschwimmen können. Die Trennung der Reaktionskomponenten des Bindemittels erfolgt durch eine gegenüber beiden Komponenten inerte Beschichtung.

In einer vorteilhaften Ausführungsvariante der Erfindung bilden die inerten Hilfsstoffe einen Bestandteil der Füllstoffe und übernehmen auf diese Weise im ausgehärteten Mehrkomponentenmörtel zusätzlich auch stützende/armierende Funktionen. Als für diesen Zweck geeignete inerte Hilfstoffe können beispielsweise Glas, Keramik, hochfeste Polymere usw. eingesetzt werden.

In einer bevorzugten Ausführungsvariante des erfindunggemässen Mörtelgebindes umfassen die Reaktionskomponenten des Bindemittels ein Vinylesterurethanharz und einen zugehörigen Härter, wobei der Volumensanteil von Harz und Härter zusammengenommen etwa 25% bis etwa 55% und der Füllstoffanteil etwa 40% bis etwa 70% des Gesamtvolumens des Mörtelgebindes beträgt. Dieses organische System und vorteilhafte Weiterbildungen desselben sind in der DE-A-41 11 828 beschrieben.

In einer vorteilhaften Variante der Erfindung umfasst das Bindemittel ein anorganisches System von Reaktionskomponenten, wobei die Reaktionskomponenten in Gegenwart von Wasser abbindende und härtende Massen auf der Grundlage
a) von feinteiligem SiO₂ oder feinteiliges SiO₂ und Al₂O₃ enthaltenden Gemischen,
b) von zumindest teilweise wasserlöslichen Alkalisilikaten und/oder Ammoniumsilikaten und/oder Akalioxiden bzw. -hydroxiden und amorpher dispers pulverförmiger Kieselsäure als Alkalisilikat-Prekursoren,
c) von solchen anorganischen und/oder metallorganischen Verbindungen, die beim Kontakt mit Wasser eine die Härtung der Masse beschleunigende starke Wärmetönung zeigen und
d) gegebenenfalls versehen mit Gehalten an Treibmitteln und dergleichen
sind. Ein derartiges anorganische Bindemittel und vorteilhafte Weiterbildungen davon sind Gegenstand der US-A-5,228,913.

Im folgenden wird die Erfindung mit allen ihr als wesentlich zugehörigen Einzelheiten anhand von in den schematischen Zeichnungen dargestellten Ausführungsbeispielen näher erläutert. Es zeigen:
- Fig. 1: ein erstes Ausführungsbeispiel des erfindungsgemässen Mörtelbebindes im teilweisen Längsschnitt,
- Fig. 2: ein Querschnitt durch das Mörtelgebinde gemäss Fig. 1 und
- Fig. 3: ein zweites Ausführungsbeispiel des erfindungsgemässen Mörtelgebindes.

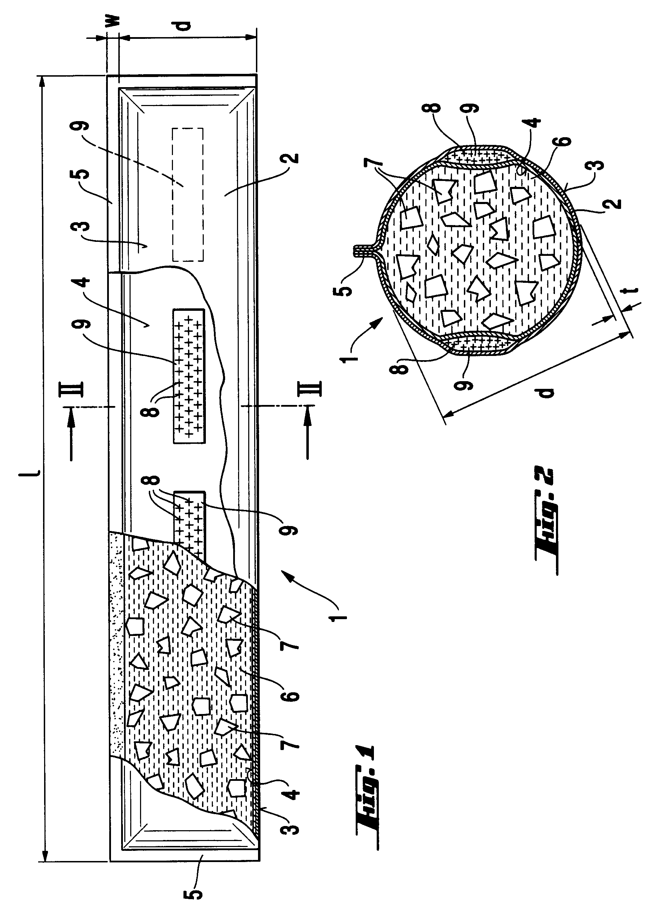

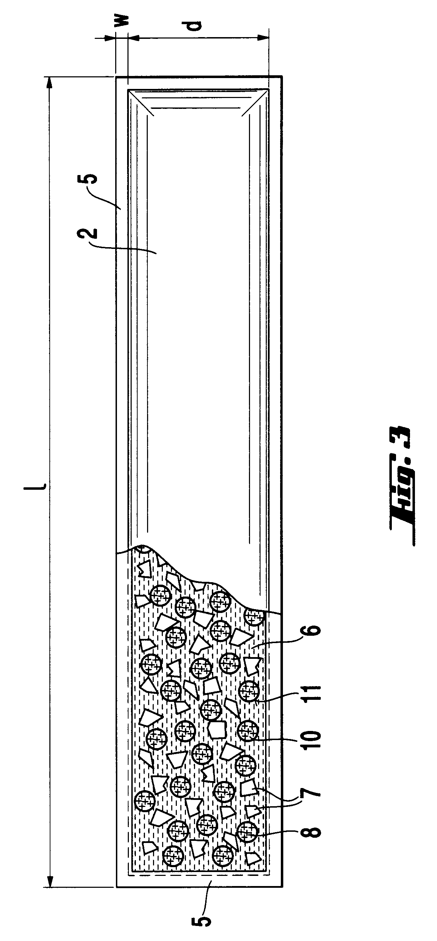

Ein erstes Ausführungsbeispiel des erfindungsgemässen Mörtelgebindes ist in Fig. 1 und 2 schematisch dargestellt und jeweils gesamthaft mit dem Bezugszeichen 1 versehen. Das Mörtelgebinde umfasst ein etwa zylindrisches Behältnis 2 mit einem Aussendurchmesser d, das aus einer flexiblen Folie bzw. einem Folienverbund 3, 4 hergestellt ist. Als Folienmaterialien kommen Polyamid, Polyvinylchlorid, Polyacrylnitril, Polyester und/oder Verbunde aus diesen Materialien oder von Papier mit siegelfähigen Polymeren in Frage. An den Enden und an einer Längsseite ist der Folienverbund 3, 4 flüssigkeitsdicht gesiegelt. Die Siegelnähte 5 weisen dabei eine Breite w auf, die zwischen 5% und 50% des Gebindeaussendurchmessers d liegt. Die Wandstärke t des Folienverbunds 3, 4 beträgt etwa 0,1% bis etwa 3% des Aussendurchmessers d des Mörtelgebindes 1. Der Folienverbund weist eine Reissdehnung von < 300% der ursprünglichen Folienlänge auf. Der Volumentsanteil des Materials 3, 4 des Behältnisses beträgt weniger als 15% des Gesamtvolumens des Mörtelgebindes. Innerhalb des Behältnisses 2 sind ein Bindemittel 6, 8 und Füllstoffe 7 angeordnet. Der Volumensanteil des Bindemittels 6, 8 beträgt etwa 15% bis etwa 60% und der des Füllstoffs etwa 35% bis etwa 70% des Gesamtvolumens des Mörtelgebindes 1.

Das Bindemittelsystem umfasst wenigstens zwei Reaktionskomponenten 6 bzw. 8. Eine der Reaktionskomponenten 8 ist auf vorzugsweise faserverstärkten Gewebe- oder Vliesträgern 9 fixiert. Die vorzugsweise faserverstärkten Gewebe- oder Vliesträger 9 sind zwischen den einzelnen Schichten 3 bzw. 4 des Foleinverbundes angeordnet und erstrecken sich etwa über die Gesamtlänge des Behältnisses 2. Auf diese Weise sind die beiden Reaktionskomponenten 6, 8 voneinander getrennt und kommen erst bei Zerstörung des Behältnisses 2 beim drehschlagenden Einbringen eines Verankerungselementes miteinander in Verbindung.

Das Bindemittel 6, 8 kann ein anorganisches oder ein organisches System umfassen oder auch ein Gemisch von anorganischen und organischen Systemen sein. Als anorganisches System ist ein System von Reaktionskomponenten bevorzugt, welches in Gegenwart von Wasser abbindende und härtende Massen auf der Grundlage
a) von feinteiligem SiO₂ oder feinteiliges SiO₂ und Al₂O₃ enthaltenden Gemischen,
b) von zumindest teilweise wasserlöslichen Alkalisilikaten und/oder Ammoniumsilikaten und/oder Akalioxiden bzw. -hydroxiden und amorpher dispers pulverförmiger Kieselsäure als Alkalisilikat-Prekursoren,
c) von solchen anorganischen und/oder metallorganischen Verbindungen, die beim Kontakt mit Wasser eine die Härtung der Masse beschleunigende starke Wärmetönung zeigen und
d) gegebenenfalls versehen mit Gehalten an Treibmitteln und dergleichen
umfasst. Ein derartiges anorganische Bindemittel und vorteilhafte Weiterbildungen davon sind Gegenstand der US-A-5,228,913.

Als organische Systeme werden vor allem Reaktionskomponenten bevorzugt, die ein Vinylesterurethanharz und einen zugehörigen Härter umfassen, wobei der Volumensanteil von Harz und Härter zusammengenommen etwa 25% bis etwa 55% und der Füllstoffanteil etwa 40% bis etwa 70% des Gesamtvolumens des Mörtelgebindes 1 beträgt. Dieses organische System und vorteilhafte Weiterbildungen desselben sind in der DE-A-41 11 828 beschrieben.

Es versteht sich, dass bei Gemischen von organischen und anorganischen Systemen als Bindemittel 6, 8 die Volumensverhältnisse der Reaktionspartner entsprechend angepasst werden müssen. Insgesamt jedoch bleiben die Volumensverhältnisse des Bindemittels 6, 8, des Füllstoffes 7 und des Materials 3, 4 des Behältnisses 2 jedoch erhalten.

Die Füllstoffe 7 sind vorzugsweise grobdisperse Materialien, die gegenüber dem Bindemittel 6, 8 weitgehend inert sind, eine Härte nach Mohs von > 4 und eine Dichte von ≧ 2 g/cm³ aufweisen. Die Füllstoffe 7 besitzen eine körnige und kantige Teilchengestalt. Mindestens 80% (Gewicht) der Füllstoffteilchen weisen einen Äquivalentdurchmesser auf, der etwa 5% bis etwa 25% des Aussendurchmessers d des Mörtelgebindes 1 beträgt. Als Äquivalentdurchmesser eines unregelmässig geformten Füllstoffteilchens wird dabei der Durchmesser einer Kugel von äquivalentem Volumen angesehen.

Bei dem in Fig. 3 schematisch dargestellten zweiten Ausführungsbeispiel des erfindungsgemässen Mörtelgebindes 1 umfasst das Behältnis 2 zwei miteinander verbundene Schalen, die aus dem Folienmaterial vorzugsweise tiefgezogen sind. Die beiden Halbschalen werden entlang der Siegelbereiche 5 miteinander flüssigkeitsdicht verbunden. Eine der Reaktionskomponenten 8 ist zusammen mit inerten Hilfstoffen zu teilchenförmigen Agglomeraten 10 verbunden, welche eine Dichte von etwa 60% bis etwa 120 % der Dichte des Füllstoffs 7 aufweisen und einen Äquivalentdurchmesser aufweisen, der etwa das 0,5-fache bis etwa das 4-fache des Äquvalentdurchmessers der Mehrzahl der Füllstoffteilchen beträgt. Die Agglomerate 10 sind unmittelbar in die zweite Reaktionskomponente 6 eingebettet, wobei sie durch eine gegenüber den Reaktionskomponenten 6, 8 inerte Beschichtung 11 voneinander getrennt sind. Durch die gewählte Dichte und die festgelegten Äquivalentdurchmesser der Agglomerate 10 ist sichergestellt, dass die Agglomerate 10 innerhalb des Mörtelgebindes 1 ortsfest angeordnet sind und sich nicht durch die Handhabung des Mörtelgebindes 1 an einem Ende des Behältnisses 2 ansammeln. Die Dichte und die Äquivalentdurchmesser der Agglomerate 10 sind dabei gerade so gewählt, dass sie nicht durch die Wirkung der Schwerkraft im Füllstoff 7 absinken und auch nicht in der zweiten Reaktionskomponente 6 des Bindemittels aufschwimmen können.

Die Trennung der Reaktionskomponenten 6, 8 des Bindemittels erfolgt durch eine gegenüber beiden Komponenten inerte Beschichtung 11. Als inerte Hilfstoffe können beispielsweise Glas, Keramik, hochfeste Polymere usw. eingesetzt werden. In diesem Fall stellen die inerten Hilfsstoffe einen Bestandteil der Füllstoffe 7 dar und übernehmen im ausgehärteten Mehrkomponentenmörtel zusätzlich stützende/armierende Funktionen. Als inerte Hilfsstoffe können beispielsweise auch Kreide, Gips, Erdalkalimetalloxide, Weichmacher auf Basis polymerer Dicarbonsäureester und dergleichen eingesetzt werden.

In einer alternativen Ausführungsvariante der Erfindung kann das Mörtelgebinde auch zwei oder ggf. sogar mehrere längliche Folienbeutel umfassen, die ineinander und/oder parallel zueinander angeordnet sind. Die einzelnen Reaktionskomponenten sind in den Folienbeuteln bis zum Zerstören der Folienbeutel beim Setzen des Mörtelgebindes getrenn voneinander aufbewahrt. Die Füllstoffe sind in einem der Beute enthalten oder über mehrere Beute verteilt.

Die erfindungsgemässe Ausbildung des Mörtelgebindes gewährleistet eine sehr gute Verbindung zwischen dem zu befestigenden Verankerungsmittel und der Bohrlochwandung. Durch die Flexibilität des Materials des Behältnisses ist das Mörtelgebinde problemlos handhabbar. Das Behältnis ist stabil genug, um auch ohne spezielle Vorkehrungen bei seiner Lagerung und während des Transports das Bindemittel und den Füllstoff zuverlässig zurückzuhalten. Es ist weitgehend unempfindlich gegenüber Erschütterungen und zerbricht nicht, auch wenn es versehentlich zu Boden fällt. Trotzdem ist das Behältnis beim drehschlagenden Einbringen eines Verankerungsmittels, beispielsweise einer Ankerstange, einer Innengewindehülse oder eines Betoneisens relativ leicht zerstörbar und zerkleinerbar. Dabei gewährleistet der geringe Volumensanteil des Materials des Behältnisses von weniger als 15% des Gesamtvolumens des Mörtelgebindes, dass das zerkleinerte Behältnis sich nicht negativ auf die Tragfestigkeit der Verankerung auswirkt. Der Volumensanteil des Bindemittels beträgt etwa 15% bis etwa 60% und der des Füllstoffs etwa 35% bis etwa 70% des Gesamtvolumens des Mörtelgebindes. Durch die gewählten Volumensverhältnisse ist ein ausreichend hoher Setzwiderstand beim drehschlagenden Einbringen des Verankerungsmittels gewährleistet. Der gesamte Füllstoff ist bezüglich seiner Eigenschaften und Beschaffenheit vorgebbar; das zerkleinerte Behältnis selbst ist kein Bestandteil des Füllstoffes. Dadurch kann der Setzwiderstand gezielt gesteuert werden, um eine sehr gute Durchmischung der einzelnen Bestandteile des Mehrkomponentenmörtels, insbesondere der Reaktionskomponenten des Bindemmittels, zu erzielen. Die sehr gute Durchmischung zusammen mit dem nur geringen Volumensanteil des flexiblen und zerstörbaren Materials des Behältnisses bewirkt, dass die Bestandteile des Behältnisses sehr gleichmässig im Mörtel verteilt werden. Dadurch, dass im wesentlichen der gesamte Füllstoff bezüglich seiner Eigenschaften und Beschaffenheit vorgebbar ist, kann dieser auch auf die Eigenschaften des Materials des Behältnisses abgestimmt werden, beispielsweise um die Zerkleinerung desselben beim drehschlagenden Einbringen des Verankerungsmittels zu unterstützen. Der gesamte Füllstoff kann auf das verwendete Bindemittel abgestimmt werden und gezielt auf die gewünschte Festigkeit des ausgehärteten Mörtels hin ausgewählt werden. Auf diese Weise ist eine möglichst gute Verbindung zwischen dem zu befestigenden Verankerungsmittel und der Bohrlochwandung gewährleistet.

## Patentansprüche

1. Mörtelgebinde zur chemischen Befestigung von Verankerungsmitteln in Bohrlöchern, das ein im wesentlichen zylindrisches äusseres Behältnis (2) umfasst, welches beim Setzen des Verankerungsmittels zerstörbar ist, und innerhalb des Behältnisses (2) angeordnet die einzelnen Bestandteile eines Mehrkomponentenmörtels enthält, der ein Bindemittel (6, 8) und Füllstoffe (7) umfasst, **dadurch gekennzeichnet**, dass das Behältnis (2) aus einem flexiblen Material (3, 4) besteht, dessen Volumensanteil weniger als 15% des Gesamtvolumens des Mörtelgebindes (1) beträgt, wobei der Volumensanteil des Bindemittels (6, 8) etwa 15% bis etwa 60% und der des Füllstoffs (7) etwa 35% bis etwa 70% des Gesamtvolumens des Mörtelgebindes (1) beträgt.

2. Vorrichtung nach Anspruch 1, dadurch gekennzeichnet, dass die Füllstoffe (7) grobdisperse Materialien sind, die gegenüber dem Bindemittel (6, 8) weitgehend inert sind, eine Härte nach Mohs von > 4 und eine Dichte von ≧ 2 g/cm³ aufweisen und eine körnige und kantige Teilchengestalt aufweisen, wobei mindestens 80% (Gewicht) der Teilchen einen Äquivalentdurchmesser aufweisen, der etwa 5% bis etwa 25% des Aussendurchmessers (d) des Mörtelgebindes (1) beträgt.

3. Vorrichtung nach Anspruch 1 oder 2, dadurch gekennzeichnet, dass die Wandstärke (t) des Behältnisses (2) etwa 0,1% bis etwa 3% des Aussendurchmessers (d) des Mörtelgebindes (1) beträgt und dass das Material des Behältnisses (2) eine Folie (3, 4) ist, die eine Reissdehnung von < 300% der ursprünglichen Folienlänge aufweist.

4. Vorrichtung nach Anspruch 3, dadurch gekennzeichnet, dass das Behältnis (2) zwei miteinander verbundene Schalen umfasst, die aus der Folie (3, 4) vorzugsweise tiefgezogen oder geblasen sind.

5. Vorrichtung nach einem der vorangehenden Ansprüche, dadurch gekennzeichnet, dass das Bindemittel (6, 8) ein organisches oder ein anorganisches Bindemittelsystem oder eine Mischung daraus ist und aus mindestens zwei Reaktionskomponenten besteht, die im wesentlichen über die gesamte Länge (l) des Behältnisses (2) angeordnet sind.

6. Vorrichtung nach Anspruch 5, dadurch gekennzeichnet, dass eine der Reaktionskomponenten (8) auf vorzugsweise faserverstärkten Gewebe- oder Vliesträgern (9) fixiert ist, die derart in das Material (3, 4) des Behältnisses (2) eingearbeitet sind, dass die darauf fixierte Reaktionskomponente (8) erst bei Zerstörung des Behältnisses (2) mit der zweiten Reaktionskomponente (6) in Verbindung kommt.

7. Vorrichtung nach Anspruch 5, dadurch gekennzeichnet, dass eine der Reaktionskomponenten (8) zusammen mit inerten Hilfstoffen zu teilchenförmigen Agglomeraten (10) verbunden ist, welche eine Dichte von etwa 60% bis etwa 120 % der Dichte des Füllstoffs (7) aufweisen und einen Äquivalentdurchmesser aufweisen, der etwa das 0,5-fache bis etwa das 4-fache des Äquvalentdurchmessers der Mehrzahl der Füllstoffteilchen beträgt, und dass die Agglomerate (10) unmittelbar in die zweite Reaktionskomponente (6) eingebettet sind, wobei sie durch eine gegenüber den Reaktionskomponenten (6, 8) inerte Beschichtung 11 voneinander getrennt sind.

8. Vorrichtung nach Anspruch 7, dadurch gekennzeichnet, dass die inerten Hilfstoffe Bestandteile der Füllstoffe (7) sind.

9. Vorrichtung nach einem der Ansprüche 5-8, dadurch gekennzeichnet, dass die Reaktionskomponenten des Bindemittels (6, 8) ein Vinylesterurethanharz und einen zugehörigen Härter umfassen, wobei der der Volumensanteil von Harz und Härter zusammengenommen etwa 25% bis etwa 55% und der Füllstoffanteil etwa 40% bis etwa 70% des Gesamtvolumens des Mörtelgebindes (1) beträgt.

10. Vorrichtung nach einem der Ansprüche 5-8, dadurch gekennzeichnet, dass das Bindemittel (6, 8) ein anorganisches System von Reaktionskomponenten umfasst, wobei die Reaktionskomponenten in Gegenwart von Wasser abbindende und härtende Massen auf der Grundlage
a) von feinteiligem SiO₂ oder feinteiliges SiO₂ und Al₂O₃ enthaltenden Gemischen,
b) von zumindest teilweise wasserlöslichen Alkalisilikaten und/oder Ammoniumsilikaten und/oder Akalioxiden bzw. -hydroxiden und amorpher dispers pulverförmiger Kieselsäure als Alkalisilikat-Prekursoren,
c) von solchen anorganischen und/oder metallorganischen Verbindungen, die beim Kontakt mit Wasser eine die Härtung der Masse beschleunigende starke Wärmetönung zeigen und
d) gegebenenfalls versehen mit Gehalten an Treibmitteln und dergleichen
sind.
